# EUROPEAN PATENT SPECIFICATION

(11) **EP 3 585 150 B1**
(45) Date of publication and mention of the grant of the patent: **14.04.2021**
(21) Application number: 18709256.4
(22) Date of filing: 27.02.2018
(51) Int. Cl.: A01J 27/04

(54) **A DEVICE FOR AND A METHOD OF CUTTING CHEESE**
VORRICHTUNG UND VERFAHREN ZUM SCHNEIDEN VON KÄSE
DISPOSITIF ET PROCÉDÉ DE COUPE DE FROMAGE

(30) Priority: 27.02.2017 DK PA201770144
(43) Date of publication of application: 01.01.2020
(73) Proprietor: Primodan A/S, 4390 Vipperød (DK)
(72) Inventor: GOTTHELF, Finn Bang, 4571 Grevinge (DK); HENRIKSEN, Lars, 4000 Roskilde (DK); HENRIKSEN, Jørgen, 4330 Hvalsø (DK)
(74) Representative: Plougmann Vingtoft a/s
(86) International application number: PCT/DK2018/050036
(87) International publication number: WO 2018/153422

(56) References cited:
- US-A- 3 836 688

## Description

### FIELD OF THE INVENTION

The present invention relates to the technical field of dairy production, in particular production of cast white cheeses.

### BACKGROUND OF THE INVENTION

Cast white cheeses in retail containers are becoming very popular. The containers can be plastic cups or metal cans. Plastic cups in Polystyrene or Polypropylene are used when shelflife of the product up to 4 months is acceptable. By adding oxygen and light barriers in the plastic sheet used in the cup forming process, shelflife can be extended up to approximately 9 months.

Some producers prefer to use metal cans mainly for products to be exported as shelflife can be increased up to 12 months. Round cans are frequently used for cans containing from 250 to 1200 gram of cheese. The small size can is typically for cheese in one block, but the larger cans contains more layers of cheese blocks. A 1000 gram can will often have 4 layers of cheese and each layer cut in two or three sections this in order to facilitate extraction of the cheese blocks from the cans. Production of such a product with todays technology takes place as follows: Cans after cleaning and internal spraying with slip spray are brought to a filling station where first layer is cast in the can, the can is then moved on a coagulation conveyor for a period of approximately 20 minutes before returning for filling of a second layer,again a 20 minutes delay for coagulation,for each of the following layers. Vertical cutting in the can through all layers in the can takes place 20 minutes after the last filling.

A can with 4 layers will have a processing time of 1 ½ hour, 80 minutes for coagulation and 10 minutes for filling and cutting. During that time the cans are with open top exposed to contamination by yeast and mould from the ambient dairy atmosphere

Document US 3 836 688 A discloses a device for cutting cheese curd and consists of a rotary shaft carrying a vertical frame of parallel wires and a plate, and a horizontal frame of parallel wires in its base. This arrangement enables to cut the curd at right angles to form cubes.

Hence, an improved method of fabrication would be advantageous, and in particular a more efficient and/or reliable way of horizontally separating the layers of cheese during production would be advantageous.

### OBJECT OF THE INVENTION

An object of this invention is to provide an alternative to the prior art by introducing a device which will reduce the cost by speeding up the manufacturing process and minimizing the risk of contamination.

A further object of the present invention is to provide an alternative to the prior art.

### SUMMARY OF THE INVENTION

Thus, the above described object and several other objects are intended to be obtained in a first aspect of the invention by providing a cutting device according to claim 1 for cutting a block of cheese in a cylindrincal retail container in a horizontal plane so as to produce at least two vertically spaced cheese sections. The cutting device comprises a rotatable shaft having a first knife for cutting the block of cheese in the horizontal plane, the first knife extending out from the shaft. The cutting device further comprises a braking element that comprises a first braking member. The first braking member extends from the rotatable shaft in a first vertical plane defined by the rotatable shaft, the first braking member having a shape corresponding to at least a part of the intersection of the first vertical plane and a top-most cheese section. The braking element is arranged above the first knife and configured for being maintained in a non-rotatable position, relatively to the rotation of the shaft, while the rotatable shaft with said first knife is being rotated a full revolution. In this way, the block of cheese is kept from rotating by the braking member of the braking element while the first knife separates a bottom section of cheese from the topmost section of cheese. Thereby, the full mass of cheese to be packaged in the retail container may be filled into the container in a single filling, and subsequently be cut into multiple vertically spaced cheese sections (i.e. slices) after coagulation.

Cheese as used herein e.g. in relation with "block of cheese" is preferably to be understood in broad terms, such as cheese in general, such as coagulated cheese curd, such as freshly coagulated cheese curd. In some embodiments, the cheese is white cheese, such as acidified white cheese. In some embodiments, the cutting is performed after coagulation of cheese curd and before or after syneresis sets-in. When acidified white cheese is produced, embodiments of the invention may also include dosing salt to the block of cheese after it has been cut and after syneresis sets-in.

Throughout this document, for ease of reading, the terms horizontal, vertical, top, bottom, etc. have been used in their conventional meaning to define relative directions in relationship to a retail container having an opening in the top, i.e. standing up in a vertical position. We note that in case the retail container is oriented differently, e.g. at an angle, the orientation of the cutting device will have to be changed accordingly.

The retail container in the context of this invention is preferably a right circular cylindrical container, such as a can, designed to contain from about 250 grams to about 2000 grams of cheese.

In an embodiment, the cutting device further comprises a second knife extending out from the shaft, the second knife being separated from the first knife by a vertical spacing, the vertical spacing being chosen to correspond to a desired vertical dimension of a cheese section. In this way, the block of cheese may cut into three or more vertical sections in a single step. Analogously, the number of knives may be further increased, i.e. for a total of 3, 4, 5, or more knives, so as to result in a container with 4, 5, 6, or more vertical cheese sections.

In an embodiment, the first knife and the second knife extend from the shaft in a substantially identical direction. In this way, the cutting device may be inserted into the block of cheese without forming or requiring more than one vertical cut throughout the height of the block.

In an embodiment, the first knife and the second knife extend from the shaft in diverging directions.

In an embodiment, the cutting device further comprises a vertical sectioning knife, the vertical sectioning knife comprising two or more vertical sectioning knife members, each vertical sectioning knife member extending radially from a bottom-most end of the shaft. In this way, the block of cheese may be separated into two or more vertical sections as the cutting device is inserted into the container, whereafter when the cutting device is fully inserted in the container, the horizontal cutting may be performed by rotating the shaft as described above. In this way, both horizontal and vertical cutting may be performed in one step using a single cutting device.

The invention relates also to a method of producing cheese in a retail container. The method according to claim 6 comprises filling a cheese curd into the retail container, and coagulating the cheese curd into a block of cheese. The method further comprises horizontally cutting the block of cheese with the cutting device according to any of the abovementioned embodiments. In this way, the speed of producing a full container of cheese is much improved since only one pass through the filling station is required. This also reduces the risk of contamination of the open container significantly.

In an embodiment, the method further comprises the step of vertically cutting the block of cheese before the step of horizontally cutting the block of cheese. In this way, attractive, uniform pieces of cheese may be formed directly in the retail container. Such pieces are furthermore convenient to remove from the container for serving or further uses.

The aspects of the present invention may each be combined with any of the other aspects. These and other aspects of the invention will be apparent from and elucidated with reference to the embodiments described hereinafter.

### BRIEF DESCRIPTION OF THE FIGURES

The cutting device according to the invention will now be described in more detail with regard to the accompanying figures, in which
Figure 1a shows an embodiment of the cutting device according to the invention, and figure 1b shows an example stack of cheese after cutting with the device,
Figure 2a and 2b shows another embodiment of the cutting device and an example stack of cheese, respectively,
Figures 3a and 3b show examples of tools for the optional step of vertically cutting the block of cheese, and
Figure 4 shows a third embodiment of the cutting device.

The figures merely illustrates ways of implementing the present invention and are not to be construed as being limiting to other possible embodiments falling within the scope of the attached claim set. In the following description, cans are used as examples of the retail container. However, this is merely an example and not a limitation. The words "retail container" and "can" will be used interchangedly.

### DETAILED DESCRIPTION OF AN EMBODIMENT

After cleaning and spraying with slip spray, the retail containers, are brought to a filling station where they are filled with the desired quantity of cheese curd. After about 20 minutes coagulation time in a sterile air zone they arrive to a cutting station to be cut into the desired shapes or patterns. The cheese may be cut into many different patterns as will be illustrated below.

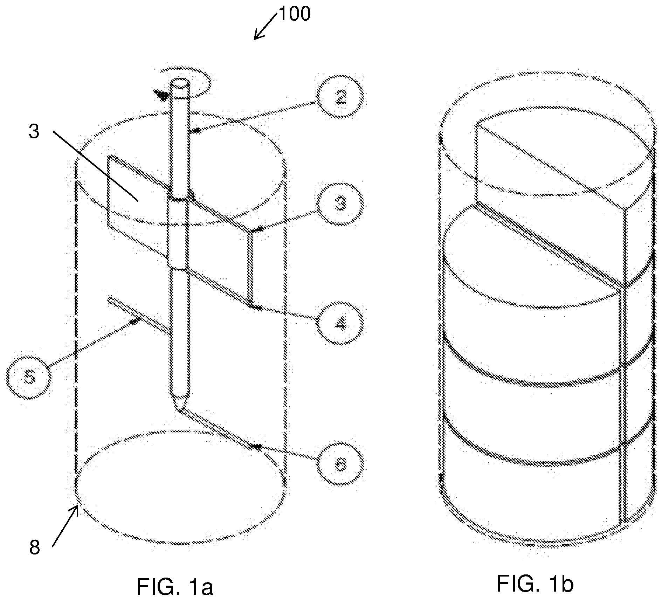

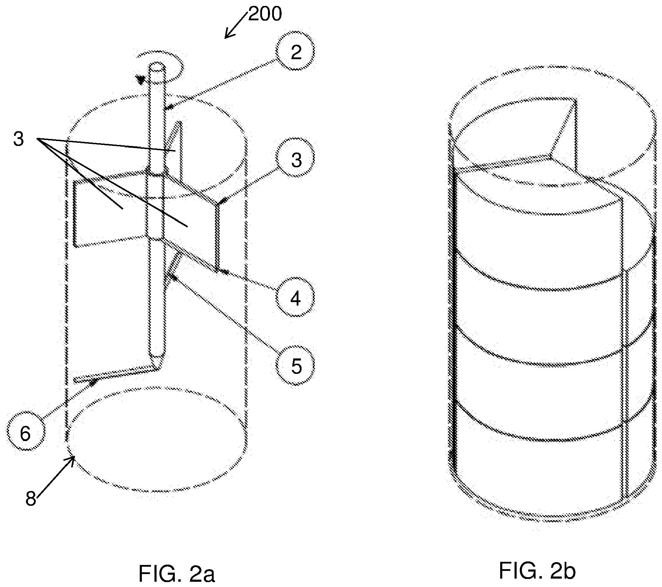

Figure 1a shows a cutting device 100 according to an embodiment of the invention. The cutting device 100 as illustrated here is for cutting the block of cheese into four layers within the retail container 8 having a side wall 9 and a bottom 10. To achieve this, three knives 4, 5, and 6 are fitted to the shaft, and each knife extending to the side wall 9. At the cutting station, the cutting device 100 is inserted into the block of cheese until the knife reaches the desired depth of the topmost layer of cheese. Here, the shaft 2 with the knives 4, 5, and 6 is rotated for a full revolution (360 degrees) to separate the four layers of cheese from each other. In order to prevent that the cheese sections in the cans rotate during the cutting process, a braking element comprising braking members 3, here in the form of a plate with a height corresponding to the thickness of the upper layer cut in the cans, is attached to the shaft with the knife. The braking element is maintained stationary while the shaft 2 and thus the knives 4, 5, 6 are rotated. Due to the resiliency of the freshly coagulated cheese curd the final product will generally show no trace after the shaft in the cutting device, see Figs.1b and 2b. In the embodiment shown in the figure, the braking element comprises two braking members 3. This provides an improved rotational stability within the cheese curd during the cutting. Figure 1b illustrates the final product after cutting with the cutting device 100, and after an optional step of vertical cutting has been performed into two sections each of about 180 degrees. It is seen that an attractive, uniform cheese product has resulted from these procedures.

For situations where the shape of the final cheese product is of less importance, a more simple embodiment of the cutting device may be used, which enables for cutting a simple pattern of cheese with only two layers in the retail container. Using the cutting device according to this embodiment (not illustrated), a bottom layer of cheese will be uniformly circular, while an upper layer will be circular with a single vertical slit cut when inserting and removing the cutting device. The cutting device comprises a shaft, one braking member, and one knife, and is operated in the same way as described above in connection with Fig. 1a.

Figure 2a shows a cutting device 200 according to another embodiment of the invention. The embodiment corresponds to the ones shown in figures 1 and 2a, where like reference numbers refer to like parts. Therefore, only the differences between the embodiments are described here. This cutting device 200 is also for cutting the block of cheese into four layers within the retail container 8. In this case, it is desired to vertically cut the block of cheese into three wedges each of about 120 degrees. Therefore, the braking element is configured with three braking members 3, arranged in the same uniform pattern with intersection angles of about 120 degrees. Similarly, the knives 4, 5, 6 are arranged in diverging directions, also of about 120 degrees angles. In this way, the block of cheese may be cut uniformly into four layers of each three cheeses, as illustrated in Fig. 2b.

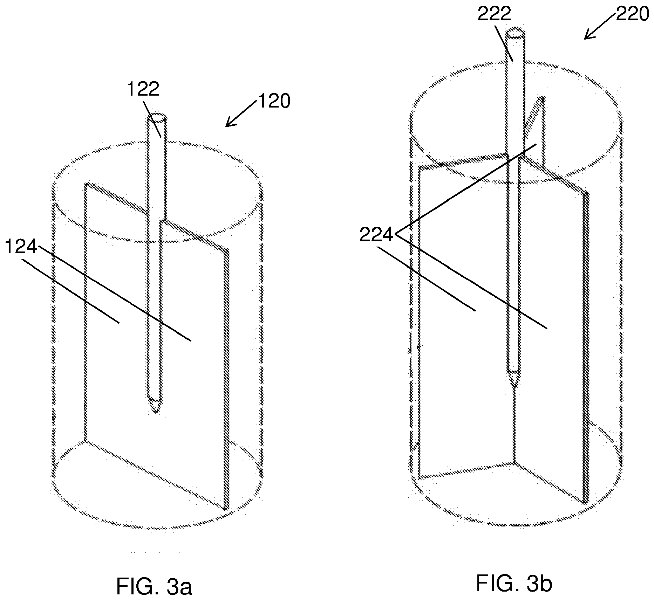

Figure 3a show an example of a vertical cutting device 120 for performing the optional vertical cutting corresponding to the pattern of cheese illustrated in Fig. 1b. The vertical cutting device 120 comprises a shaft 122 and a blade having blade members 124. In this case, the device 120 has two blade members 124, arranged as a single surface for cutting a straight cut in the block of cheese.

Figure 3b shows another example of a vertical cutting device 220 for performing the optional vertical cutting corresponding to the pattern of cheese illustrated in Fig. 2b. The vertical cutting device 220 comprises a shaft 222 and a blade having blade members 224. In this case, the device 220 has three blade members 224, arranged vertically, with intersection under an angle of about 120 degrees. In this way, the block of cheese may be cut into three wedges.

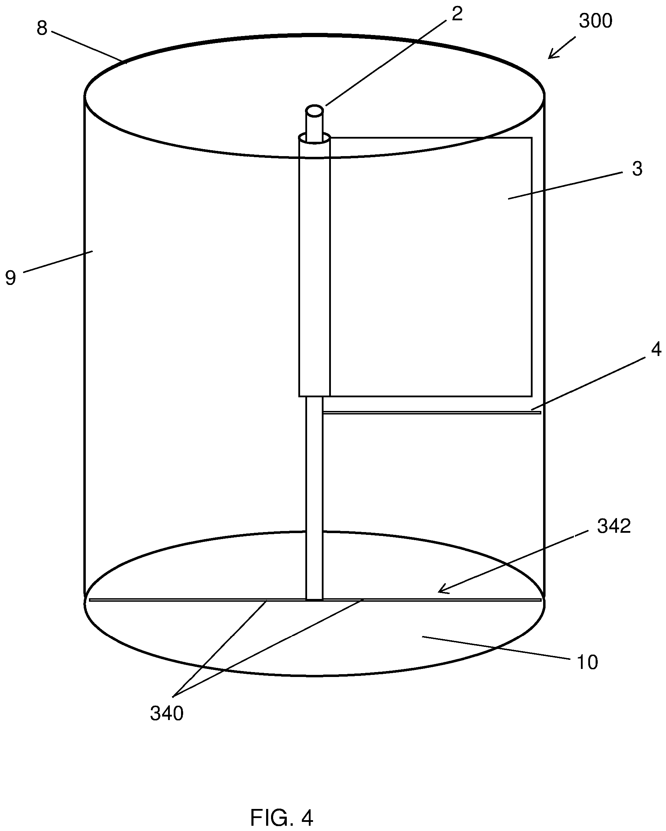

Figure 4 illustrates an embodiment of the cutting device 300 according to the invention. This cutting device 300 comprises a shaft 2, a braking member 3, and a knife 4 extending from the shaft to the side wall 9. The device 300 further comprises an optional vertical sectioning knife 342, here comprising two vertical sectioning knife members 340 arranged in succession. When this cutting device 300 is inserted into the retail container to prepare for the step of horizontally cutting the cheese, the block of cheese is simultaneously cut in the vertical direction, to achieve a pattern similar to the one shown in Fig. 1b, albeit having only two layers. Thus, the cutting device 300 is simply lowered all the way into the container, vertically cutting the cheese along the way, after which, the shaft, including the knife 4 and vertical sectioning knife 342 is rotated for one full revolution to horizontally cut the cheese. During this cutting, the braking element 3 is maintained in position to counter the cheese rotating. The skilled person will readily acknowledge that by adding an extra vertical sectioning knife member 340, this type of device may easily be configured to e.g. produce a pattern of cheese as shown in Fig. 2b.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention.

### LIST OF REFERENCE SYMBOLS USED

- 100, 200, 300: cutting device
- 2: shaft
- 3: braking member
- 4: knife
- 8: retail container
- 9: side wall
- 10: bottom
- 120, 220: vertical cutting device
- 122, 222: shaft (vertical cutting device)
- 124, 224: blade member
- 340: vertical sectioning knife member
- 342: vertical sectioning knife

## Claims

1. A cutting device (100, 200, 300) for cutting a block of cheese in a cylindrical retail container in a horizontal plane so as to produce at least two vertically spaced cheese sections, the cutting device comprising:
- a rotatable shaft (2) having a first knife for cutting the block of cheese in the horizontal plane, the first knife extending out from the shaft (2),
- a braking element (3) comprising a first braking member, the first braking member extending from the rotatable shaft in a first vertical plane defined by the rotatable shaft, the first braking member having a shape corresponding to at least a part of the intersection of the first vertical plane and a top-most cheese section, wherein
- the braking element (3) is arranged above the first knife and configured for being maintained in a non-rotatable position, relatively to the rotation of the shaft (2), while the rotatable shaft (2) with said first knife is being rotated a full revolution.

2. The cutting device according to claim 1, wherein the cutting device further comprises a second knife extending out from the shaft, the second knife being separated from the first knife by a vertical spacing, the vertical spacing being chosen to correspond to a desired vertical dimension of a cheese section.

3. The cutting device according to claim 2, wherein the first knife and the second knife extend from the shaft in a substantially identical direction.

4. The cutting device according to claim 2, wherein the first knife and the second knife extend from the shaft in diverging directions.

5. The cutting device according to any one of the preceding claims, wherein the cutting device further comprises a vertical sectioning knife, the vertical sectioning knife comprising two or more vertical sectioning knife members, each vertical sectioning knife member extending radially from a bottom-most end of the shaft.

6. A method of producing cheese in a retail container, the method comprising:
- filling a cheese curd into the retail container,
- coagulating the cheese curd into a block of cheese, and
- horizontally cutting the block of cheese with the cutting device according to any one of the preceeding claims.

7. The method according to claim 6, wherein the method further comprises the step of vertically cutting the block of cheese before the step of horizontally cutting the block of cheese.

## Patentansprüche

1. Schneidevorrichtung (100, 200, 300) zum Schneiden eines Käseblocks in einem zylindrischen Einzelhandelsbehälter in einer horizontalen Ebene, um mindestens zwei vertikal beabstandete Käseabschnitte zu erzeugen, wobei die Schneidevorrichtung umfasst:
- eine drehbare Welle (2), die ein erstes Messer zum Schneiden des Käseblocks in der horizontalen Ebene aufweist, wobei sich das erste Messer von der Welle (2) heraus erstreckt,
- ein Bremselement (3), das ein erstes Bremsteil umfasst, wobei sich das erste Bremsteil von der drehbaren Welle in einer ersten vertikalen Ebene erstreckt, die durch die drehbare Welle definiert ist, wobei das erste Bremsteil eine Form aufweist, die zumindest einem Teil des Schnittpunkts der ersten vertikalen Ebene und einem obersten Käseabschnitt entspricht, wobei
- das Bremselement (3) oberhalb des ersten Messers angeordnet und so konfiguriert ist, dass es in einer nicht drehbaren Position, relativ zur Drehung der Welle (2), gehalten wird, während die drehbare Welle (2) mit dem ersten Messer eine volle Umdrehung gedreht wird.

2. Schneidevorrichtung nach Anspruch 1, wobei die Schneidevorrichtung weiter ein zweites Messer umfasst, das sich von der Welle heraus erstreckt, wobei das zweite Messer von dem ersten Messer durch einen vertikalen Abstand getrennt ist, wobei der vertikale Abstand so gewählt ist, dass er einer gewünschten vertikalen Abmessung eines Käseabschnitts entspricht.

3. Schneidevorrichtung nach Anspruch 2, wobei sich das erste Messer und das zweite Messer in einer im Wesentlichen identischen Richtung von der Welle erstrecken.

4. Schneidevorrichtung nach Anspruch 2, wobei sich das erste Messer und das zweite Messer in divergierenden Richtungen von der Welle erstrecken.

5. Schneidevorrichtung nach einem der vorstehenden Ansprüche, wobei die Schneidevorrichtung weiter ein vertikales Trennmesser umfasst, wobei das vertikale Trennmesser zwei oder mehr vertikale Trennmesserteile umfasst, wobei sich jedes vertikale Trennmesserteil radial von einem untersten Ende der Welle erstreckt.

6. Verfahren zur Herstellung von Käse in einem Einzelhandelsbehälter, wobei das Verfahren umfasst:
- Füllen eines Käsebruchs in den Einzelhandelsbehälter,
- Koagulieren des Käsebruchs zu einem Käseblock, und
- horizontales Schneiden des Käseblocks mit der Schneidevorrichtung nach einem der vorstehenden Ansprüche.

7. Verfahren nach Anspruch 6, wobei das Verfahren weiter den Schritt des vertikalen Schneidens des Käseblocks vor dem Schritt des horizontalen Schneidens des Käseblocks umfasst.

## Revendications

1. Dispositif de coupe (100, 200, 300) destiné à couper un bloc de fromage dans un contenant cylindrique destiné à la vente au détail, dans un plan horizontal de façon à produire au moins deux sections de fromage espacées verticalement, le dispositif de coupe comprenant :
- un arbre rotatif (2) comportant un premier couteau destiné à couper le bloc de fromage dans le plan horizontal, le premier couteau s'étendant vers l'extérieur à partir de l'arbre (2),
- un élément de freinage (3) comprenant un premier élément de freinage, le premier élément de freinage s'étendant à partir de l'arbre rotatif dans un premier plan vertical défini par l'arbre rotatif, le premier élément de freinage ayant une forme correspondant à au moins une partie de l'intersection du premier plan vertical et une section de fromage la plus haute, dans lequel
- l'élément de freinage (3) est disposé au-dessus du premier couteau et configuré pour être maintenu dans une position non rotative, par rapport à la rotation de l'arbre (2), tandis que l'arbre rotatif (2) avec ledit premier couteau est mis en rotation en décrivant une révolution complète.

2. Dispositif de coupe selon la revendication 1, dans lequel le dispositif de coupe comprend en outre un deuxième couteau s'étendant vers l'extérieur à partir de l'arbre, le deuxième couteau étant séparé du premier couteau par un espacement vertical, l'espacement vertical étant choisi pour correspondre à une dimension verticale désirée d'une section de fromage.

3. Dispositif de coupe selon la revendication 2, dans lequel le premier couteau et le deuxième couteau s'étendent à partir de l'arbre dans une direction sensiblement identique.

4. Dispositif de coupe selon la revendication 2, dans lequel le premier couteau et le deuxième couteau s'étendent à partir de l'arbre dans des directions divergentes.

5. Dispositif de coupe selon l'une quelconque des revendications précédentes, dans lequel le dispositif de coupe comprend en outre un couteau sectionnant verticalement, le couteau sectionnant verticalement comprenant deux ou plus de deux éléments de couteau sectionnant verticalement, chaque élément de couteau sectionnant verticalement s'étendant radialement à partir d'une extrémité la plus basse de l'arbre.

6. Procédé de production de fromage dans un contenant destiné à la vente au détail, le procédé comprenant les étapes consistant à :
- introduire un caillé dans le contenant destiné à la vente au détail,
- coaguler le caillé en un bloc de fromage, et
- couper horizontalement le bloc de fromage à l'aide du dispositif de coupe selon l'une quelconque des revendications précédentes.

7. Procédé selon la revendication 6, dans lequel le procédé comprend en outre l'étape consistant à couper verticalement le bloc de fromage avant l'étape consistant à couper horizontalement le bloc of fromage.
